Europäisches Patentamt

European Patent Office

Office européen des brevets

(11) Veröffentlichungsnummer: **0 420 165 A2**

# EUROPÄISCHE PATENTANMELDUNG

(21) Anmeldenummer: 90118420.0

(22) Anmeldetag: 25.09.90

(51) Int. Cl.5: **A23J 3/04, A23J 3/34**

(30) Priorität: 25.09.89 DD 332931

(43) Veröffentlichungstag der Anmeldung:
03.04.91 Patentblatt 91/14

(84) Benannte Vertragsstaaten:
**AT BE CH DE DK ES FR GB GR IT LI LU NL SE**

(71) Anmelder: **INSTITUT FÜR HOCHSEEFISCHEREI
UND FISCHVERARBEITUNG GmbH i.G.
An der Jägerbäk 2
O-2510 Rostock 5(DE)**

(72) Erfinder: **Schubring, Reinhard, Dr.
Dipl.-Chem.
Paul-Schwanke-Strasse 8
O-2520 Rostock 25(DE)**
Erfinder: **Harwardt, Irene, Dipl.-Chem.
Bootsbauerweg 19
O-2520 Rostock 27(DE)**
Erfinder: **Müller, Kerstin, Dipl.-Ing.
Martin-Luther-King-Allee 12
O-2520 Rostock 40(DE)**
Erfinder: **Fiedler, Sonja, Dipl.-Ing.**

**Heinrich-Schütz-Strasse 20
O-2510 Rostock 5(DE)**
Erfinder: **Mieth, Gerhard, Dr.
Dipl.-Lebensm.-Chem.
Kiezstrasse 8
O-1500 Potsdam(DE)**
Erfinder: **Schneider, Christoph, Dipl.-Chem.
Steinweg 53
O-1532 Kleinmachnow(DE)**
Erfinder: **Brückner, Jürgen, Dr.
Dipl.-Lebensm.-Chem.
Mörickestrasse 15
O-1505 Bergholz-Rehbrücke(DE)**
Erfinder: **Marzilger, Karin, Chem.-Ing.
Herrmann-Maass-Strasse 6
O-1500 Potsdam(DE)**

(74) Vertreter: **Patentanwälte Beetz sen. - Beetz
jun. Timpe - Siegfried - Schmitt-Fumian-
Mayr
Steinsdorfstrasse 10
W-8000 München 22(DE)**

(54) Anisotrope Strukturate mit muskelähnlicher Struktur und Textur und Verfahren zu ihrer Herstellung.

(57) Die Erfindung betrifft anisotrope Strukturate aus zerkleinertem Muskelgewebe von Kalt- und Warmblütern und vorzugsweise aus zwischengelagerten Fischen und Verfahren zu ihrer Herstellung. Das Verfahren beruht auf der Gefrierstrukturierung und ggfs. thermischen Verfestigung der proteolytisch vorbehandelten und durch Zusatzstoffe ergänzten und vorgeformten Rohstoffe und ist dadurch gekennzeichnet, daß das mechanisch vorzerkleinerte und entgrätete oder entbeinte Muskelgewebe einem definierten partiellen proteolytischen Abbau mittels exogener Proteasen unterworfen wird und vor der gerichteten Gefrierstrukturierung albumäre Proteine sowie ggfs. Polysaccharide, Lipide und Proteaseinhibitoren als Strukturfixative und Tenderizer zugesetzt werden.

# ANISOTROPE STRUKTURATE MIT MUSKELÄHNLICHER STRUKTUR UND TEXTUR UND VERFAHREN ZU IHRER HERSTELLUNG

Die Erfindung betrifft anisotrope Strukturate mit muskelähnlichen Struktur- und Texturmerkmalen aus zerkleinertem Muskelgewebe von Kalt- und Warmblütern, die durch gerichtetes Gefrieren, ggfs. in Verbindung mit einer nachfolgenden thermischen Verfestigung, herstellbar sind. Hauptanwendungsgebiet ist die Restrukturierung von Seefischfarsch zu muskelähnlichen Erzeugnissen für die Lebensmittelindustrie und für Privathaushalte.

In der Patentliteratur sind zahlreiche Verfahren zur Modifizierung von Proteinen zu finden, die sowohl einen Strukturaufbau (Texturierung) als auch eine Strukturauflösung (Hydrolyse) beinhalten. Die hydrolytische Strukturauflösung erfolgt dabei hauptsächlich durch chemische oder enzymatische Behandlung, z.B. bei der Salzfischproduktion, dem Zartmachen von Warmblüterfleisch und der Herstellung von Hydrolysaten. Für den Strukturaufbau gewinnt neben der Druckverformung (Extrusion) und dem Verspinnen zu Fasern die Gefrierstrukturierung proteinhaltiger tierischer und pflanzlicher Rohstoffe zunehmend an Bedeutung.

Mit dem letztgenannten Verfahren können relativ einfach anisotrope muskelähnliche Produkte erzeugt werden, die nicht nur eine faserige Struktur, sondern auch übergeordnete Strukturelemente, wie Lamellen usw., aufweisen, wie sie intaktes, natives Muskelgewebe besitzt.

Gemäß DE-A-2 211 943 und 2 211 944 können die durch Gefrierstrukturierung gebildeten muskelähnlichen Strukturen in einer nachgeschalteten Verfahrensstufe, z.B. durch Erhitzen, verfestigt werden. Zur praktischen Durchführung der gefrierstrukturierung werden in US-A-4 084 017 und 4 167 950 sowie in DD-A-223 355 zwar Angaben gemacht, jedoch sind die darin genannten Verfahren technisch nicht ausgereift und nicht zuverlässig.

In DD-A-269 974 ist ein Verfahren zur Restrukturierung von zerkleinertem Muskelfleisch angegeben, bei dem durch Gefrierstrukturierung ein weitgehend muskelähnliches Erzeugnis erhalten wird. Wesentlich für dieses Ergebnis sind eine Zerkleinerung des Muskelfleischs auf eine Teilchengröße im subzellulären Bereich und der Zusatz von Strukturvermittlern, z.B. polyanionischen Komplexbildnern, sowie von Texturregulatoren, z.B. Proteinen, Fetten, usw.

Dieses Verfahren ist für eine Vielzahl unterschiedlicher Rohwaren (Kalt- und Warmblüterfleisch unterschiedlicher Species) geeignet. Nachteilig ist jedoch, daß dieses Verfahren für die Verarbeitung von Rohstoffen nicht geeignet ist, die bereits einen hohen Grad der Proteindenaturierung aufweisen, d.h., bei denen die originären Strukturen durch Aggregation und Vernetzung so verändert sind, daß allein durch Zerkleinerung und Zusatz von Struktur und Textur beeinflussenden, vorwiegend physikalisch wirkenden Stoffen keine ausreichenden Voraussetzungen für eine Erzeugung muskelähnlicher Strukturen durch Gefrierstrukturierung gegeben sind. Die hierbei vorliegenden und durch Zerkleinerung nur ungenügend beeinflußbaren gelartigen Netzwerke stark denaturierter Proteine verhindern das Wachstum von Eiskristallen in der gewünschten Größe und Richtung, so daß überwiegend isotrope bzw. amorphe Strukturen entstehen, die keine Muskelähnlichkeit besitzen.

Solche für die Strukturierung hinderlichen Gelnetzwerke entstehen unter anderem bei der Lagerung von Fischen, insbesondere aber bei einer längeren Gefrierlagerung von vorzerkleinerter Rohware.

Der Erfindung liegt die Aufgabe zugrunde, anisotrope Strukturate mit muskelähnlicher Struktur und Textur aus zerkleinertem Muskelgewebe, die weitgehend unabhängig von der Tierspecies und der Zwischenlagerung der Rohware sind, und Verfahren zu ihrer Herstellung durch Gefrierstrukturierung anzugeben, wobei insbesondere Verfahrensbedingungen und Zusatzstoffe aufgezeigt werden sollen und eine breite Palette möglicher Rohstoffe unter Einbeziehung von Seefischen gegeben sein soll.

Die Aufgabe wird anspruchsgemäß gelöst. Die abhängigen Ansprüche betreffen vorteilhafte Ausführungsformen der Erfindungskonzeption.

Erfindungsgemäß wird zur Herstellung der anisotropen Strukturate aus zerkleinertem Muskelgewebe von Kalt- oder Warmblütern, vorzugsweise aus zwischengelagerten Fischen, durch Gefrierstrukturierung und ggfs. thermische Verfestigung der Gefrierstrukturate mechanisch entbeintes bzw. entgrätetes Muskelgewebe zum einen einem definierten partiellen proteolytischen Abbau mittels exogener Proteasen tierischer, pflanzlicher oder mikrobieller Herkunft unterworfen. Zum anderen werden vor der gerichteten Gefrierstrukturierung Albumine bzw. albuminartige Proteine als Strukturfixative sowie ggfs. auch Polysaccharide, Lipide und Proteaseinhibitoren als Tenderizer zugesetzt.

Wie nämlich überraschenderweise gefunden wurde, lassen sich auch einer Gefrierstrukturierung unter Ausbildung anisotroper Gele bisher kaum oder nicht zugängliche Rohstoffe mit hohem Proteindenaturierungsgrad, der insbesondere bei gefriergelagerten Fischen eine negative Rolle spielt, durch eine proteolytische Vorbehandlung problemlos mittels an sich bekannter Verfahren der gerichteten Gefrierstrukturierung, ggfs. in Kombination mit einer thermischen Verfestigung der während des Gefrierprozesses gebildeten Proteinmatrix, zu Erzeugnissen mit muskelähnlichen Struktur- und Texturmerkmalen verarbeiten.

Eine unabdingbare Voraussetzung dafür ist die Einstellung von Reaktionsbedingungen und Enzymkonzentrationen, die erfindungsgemäß in Abhängigkeit von der Primärstruktur der Proteine der verarbeiteten Tierspecies zu einem Proteolysegrad der Gesamtmuskelproteine von 0,2 bis 3,0 und vorzugsweise von 0,6 bis 1,0 führen, da bei Unter- oder Überschreitung dieses Bereichs entweder nur isotrope Gele oder nur amorphe Massen gebildet werden.

Im Rahmen der Erfindung geeignete Proteasen sind solche mit saurem bis alkalischem Wirkungsbereich, vorzugsweise Proteasen mit einem engen Wirkungsbereich zwischen pH 6,0 und 8,0, da sich dadurch eine unerwünschte Texturveränderungen bedingende Nachhydrolyse während der Gefrierstrukturierung und Lagerung der Gefrierstrukturate durch pH-Wert-Verschiebung leicht einschränken läßt. Solche bevorzugten Proteasen sind beispielsweise Papain, insbesondere aus Papayafrüchten, Trypsin, insbesondere aus Pankreassaft, sowie alkalische Proteasen, insbesondere von Bacillus subtilis.

In diesem Zusammenhang wurde weiterhin gefunden, daß sich der Zusatz von Proteaseinhibitoren in Form trypsininhibitorreicher Verarbeitungsprodukte pflanzlicher Rohstoffe, vorzugsweise von schonend entfettetem oder nativem fetthaltigen Sojabohnenmehl, in Konzentrationen von 0,5 bis 10 Masse-% und vorzugweise von 1 bis 5 Masse-% hinsichtlich einer Zurückdrängung der Nachhydrolyse als zweckmäßig erweist. Diese Maßnahme entspricht einer ergänzenden oder alternativen Verfahrensweise zum Einsatz von Proteasen mit eingeschränktem pH-Wirkungsoptimum.

Eine zweite notwendige Voraussetzung für die Erzielung muskelähnlicher anisotroper Strukturen und Texturen ist der erfindungsgemäße Zusatz von Albuminen oder albuminartigen Proteinen in Form von Verarbeitungsprodukten tierischer oder pflanzlicher Rohstoffe, vorzugsweise Blutplasma- und/oder Molkeproteine, in Konzentrationen von 1 bis 10 Masse-% und vorzugsweise 3 bis 6 Masse-%, die infolge starker kovalenter Wechselwirkungen mit Muskelproteinen zu einer Strukturfixierung im Sinne einer chemischen Vernetzung führen. Ohne diese Strukturfixative resultieren zwar ebenfalls visuell ausgeprägt anisotrope Stukturen, die jedoch bei mechanischer Belastung extrem leicht zerfallen und muskeluntypische, sandige Textureindrücke ergeben.

Schließlich wurde im Rahmen der Erfindung gefunden, daß in Abhängigkeit von dem zu strukturierenden Muskelgewebe verschiedenartiger Tierspecies ein Zusatz von Tenderizern auf der Basis von polysaccharidreichen Verarbeitungsprodukten pflanzlicher und mikrobieller Rohstoffe, vorzugsweise Xanthan und Galactomannan, in Masseanteilen von 0,1 bis 5,0 Masse-% und vorzugsweise von 0,5 bis 1,0 Masse-%, sowie von polyenfettsäurereichen Verarbeitungsprodukten tierischer oder pflanzlicher Rohstoffe, vorzugsweise von Fischölen und Getreidekeimölen, in Masseanteilen von 2,0 bis 20 Masse-% und vorzugsweise von 5 bis 10 Masse-%, günstig ist. Diese Zusatzstoffe führen dabei infolge von Wechselwirkungen untereinander sowie mit Proteinen zu einer Erhöhung der Wasser- und Fettbindung in den Restrukturaten und tragen damit wesentlich zur Zartheit der Endprodukte bei.

Die erfindungsgemäßen anisotropen Strukturate sind nach den oben angegebenen Verfahren erhältlich.

Die Erfindung wird im folgenden anhand von Ausführungsbeispielen näher erläutert.

## Beispiel 1

100 kg gekuttertes Seehechtfleisch, das aus gefriergelagertem Seehecht auf bekannte Weise mittels Grätenseparatoren hergestellt war und einen Proteindenaturierungsgrad von 40 %, bezogen auf den Stickstofflöslichkeitsindex der Muskelproteine, aufwies, wurde unter Zusatz von 0,05 Masse-%, bezogen auf das zerkleinerte Fischfleisch, in 10 kg Wasser gelöster alkalischer Protease von Bacillus subtilis (Proteaseaktivität 5720 TE/g gegenüber Hämoglobin bei 50 °C und pH 6,0) bei 10 °C und pH 6,5 während 6 h bis auf einen Proteolysegehalt von 0,7 abgebaut, worauf die Proteolyse durch Zusatz von 2 % nativem Sojabohnenmehl (Trypsininhibitoraktivität 60 mg/g) gestoppt wurde.

Das proteolysierte Fischfleisch wurde mit einer in Wasser vorgequollenen Mischung von 2 Masse-% Maisstärke und 5 Masse-% Blutplasmaprotein sowie 5 Masse-% Fischöl-Raffinat, bezogen auf das Fischfleisch, homogenisiert, zur Formgebung in Kunststoffolie abgefüllt und einem gerichteten Gefrierprozeß bei -10 °C während 48 h unterworfen. Die Gefrierstrukturate wurden nach Entfernung der Kunststoffhülle in raffiniertem Sonnenblumenöl fritiert und einer sensorischen Bewertung unterzogen. Die Endprodukte wiesen grobe laminare Strukturen auf und ähnelten in ihrer Struktur gebratenem Fischmuskelfleisch.

## Beispiel 2

100 kg in einem Fleischwolf zerkleinertes Fischmuskelfleisch aus gefriergelagertem Karpfen, das wie in Beispiel 1 angegeben gewonnen worden war und einen Proteindenaturierungsgrad von 50 %, bezogen auf den Stickstofflöslichkeitsindex der myofibrillären Proteine, aufwies, wurde unter Zusatz von 0,1 Masse-%, bezogen auf das zerkleinerte Fischmuskelfleisch, in 5 kg Wasser gelöstem Trypsin (Proteaseaktivität 120 TE/g gegenüber Hämoglobin bei 50 °C und pH 6,0) bei 5 °C und pH 8,0 während 10 h bis auf einen Proteolysegrad von 0,6 abgebaut, worauf die Proteolyse durch pH-wert-Einstellung mit Citronensäure auf 3,0 gestoppt wurde. Das proteolysierte Fischmuskelfleisch wurde mit einer in Wasser vorgequollenen Mischung von 0,2 Masse-% Xanthan, 5 Masse-% Rapsalbumin und 3 Masse-% Molkeprotein sowie 4 Masse-% Maiskeimöl-Raffinat, bezogen auf die Farschmasse, homogenisiert, zur Formgebung in Kunststofffolie abgefüllt und bei -15 °C 24 h gerichtet gefroren.

Die Gefrierstrukturate wurden dann in der Kunststofffolie in einem siedenden Wasserbad 15 min gegart und zu Marinadeerzeugnissen weiterverarbeitet. Die Endprodukte wiesen feine laminare Strukturen auf und ähnelten in ihrer Textur gekochtem Krabbenmuskelfleisch.

**Beispiel 3**

100 kg mechanisch entbeintes, gefriergelagertes Geflügelfleisch, das einen proteindenaturierungsgrad von 35 %, bezogen auf den Stickstofflöslichkeitsindex der Muskelproteine, aufwies, wurde unter Zusatz von 0,2 Masse-%, bezogen auf das zerkleinerte Geflügelfleisch, in 7,5 kg Wasser gelöstem Papain (Proteaseaktivität 980 TE/g gegenüber Hämoglobin bei 50 °C und pH 6) bei 35 °C und pH 7,0 während 5 h bis auf einen Proteolysegrad von 0,8 abgebaut, worauf die Proteolyse durch Zusatz von 5 Masse-% Erbsenmehl (Trypsininhibitoraktivität 30 mg/g) gestoppt wurde.

Das proteolysierte Geflügelfleisch wurde dann mit einer in Wasser vorgequollenen Mischung von 1,0 Masse-% hochverestertem Pektin und 7,0 Masse-% Eiklarpulver sowie 3 Masse-% Sonnenblumenöl homogenisiert und nach dem Abfüllen in geeignete Formen bei -13 °C während 30 h einem gerichteten Gefrierprozeß unterworfen.

Das nach Entfernung der Formhülle in Stücken von 20 mm Stärke portionierte Material wies nach dem Fritieren eine für Geflügelsteaks typische, etwas feste und faserige Textur auf.

**Ansprüche**

1. Verfahren zur Herstellung anisotroper Strukturate aus zerkleinertem Muskelgewebe von Kalt- und Warmblütern, vorzugsweise aus zwischengelagerten Fischen, durch Gefrierstrukturierung und ggfs. thermische Verfestigung der proteolytisch vorbehandelten, durch Zusatzstoffe, einschließlich Strukturverstärkern und Texturregulatoren, supplementierten und vorgeformten Rohstoffe, **dadurch gekennzeichnet , daß** das mechanisch vorzerkleinerte und entgrätete oder entbeinte Muskelgewebe einem definierten partiellen proteolytischen Abbau mittels exogener Proteasen tierischer, pflanzlicher oder mikrobieller Herkunft unterworfen wird und vor der gerichteten Gefrierstrukturierung albumäre Proteine sowie ggfs. Polysaccharide, Lipide und Proteaseinhibitoren als Strukturfixative und Tenderizer zugesetzt werden.

2. Verfahren nach Anspruch 1, dadurch gekennzeichnet, daß Rohstoffe mit lagerungsbedingtem hohem Denaturierungsgrad der Muskelproteine, vorzugsweise Seefische mit einem proteindenaturierungsgrad ≧ 15 %, Süßwasserfische mit einem proteindenaturierungsgrad ≧ 25 % oder Muskelfleisch von Warmblütern mit einem Proteindenaturierungsgrad ≧ 35 % bezogen auf den Stickstofflöslichkeitsindex, eingesetzt werden.

3. Verfahren nach Anspruch 1 und 2, dadurch gekennzeichnet, daß Proteasen mit einem Wirkungsbereich im sauren bis alkalischen pH-Bereich, vorzugsweise Proteasen mit einem engen Wirkungsbereich zwischen pH 6,0 und 8,0, eingesetzt werden.

4. Verfahren nach den Ansprüchen 1 bis 3, dadurch gekennzeichnet, daß durch die Proteolyse ein Proteolysegrad der Muskelproteine von 0,2 bis 3,0 und vorzugsweise von 0,6 bis 1,0 eingestellt wird.

5. Verfahren nach den Ansprüchen 1 bis 4, dadurch gekennzeichnet, daß als Proteaseinhibitoren trypsininhibitorreiche Verarbeitungsprodukte pflanzlicher Rohstoffe, vorzugsweise schonend entfettetes oder natives fetthaltiges Sojabohnenmehl, in Konzentrationen von 0,5 bis 10 Masse-% und vorzugsweise von 1 bis 5 Masse-% zugesetzt werden.

6. Verfahren nach den Ansprüchen 1 bis 5, dadurch gekennzeichnet, daß albumäre Proteine als Verarbeitungsprodukte tierischer oder pflanzlicher Rohstoffe, vorzugsweise Blutplasma- und Molkeproteine, in Anteilen von 1 bis 10 Masse-% und vorzugsweise von 3 bis 6 Masse-% zugesetzt werden.

7. Verfahren nach den Ansprüchen 1 bis 6, dadurch gekennzeichnet, daß als Tenderizer polysaccharidreiche Verarbeitungsprodukte pflanzlicher und mikrobieller Rohstoffe, vorzugsweise Xanthan und Galactomannan, in Anteilen von 0,1 bis 5,0 Masse-% und vorzugsweise von 0,5 bis 1,0 Masse-% sowie polyenfettsäurereiche Verarbeitungsprodukte tierischer und pflanzlicher Rohstoffe, vorzugsweise Fischöle und Getreidekeimöle, in Anteilen von 2 bis 20 Masse-% und vorzugsweise von 5 bis 10 Masse-% zugesetzt werden.

8. Anisotrope Strukturate aus zerkleinertem Muskelgewebe von Kalt- und Warmblütern, erhältlich nach den Verfahren der Ansprüche 1 bis 7.

.